# EUROPÄISCHE PATENTSCHRIFT

(11) **EP 4 077 481 B1**
(45) Veröffentlichungstag und Bekanntmachung des Hinweises auf die Patenterteilung: **28.02.2024**
(21) Anmeldenummer: 20842184.2
(22) Anmeldetag: 17.12.2020
(51) Int. Cl.: C08G 75/14, C08F 212/08, C08F 230/02, C08L 25/18, C08L 81/04, C09K 21/14

(54) **FLAMMGESCHÜTZTE COPOLYMERE UND FORMMASSEN**
FLAME-RETARDED COPOLYMERS AND MOLDING COMPOUNDS
COPOLYMÈRES ET COMPOSÉS DE MOULAGE IGNIFUGES

(30) Priorität: 19.12.2019 DE 102019135325
(43) Veröffentlichungstag der Anmeldung: 26.10.2022
(73) Patentinhaber: Hochschule Hamm-Lippstadt, 59063 Hamm (DE); Universität Siegen, 57076 Siegen (DE)
(72) Erfinder: FRANK, Petra, 57076 Siegen (DE); LUKSIN, Michael, 59063 Hamm (DE); FUCHS, Sabine, 59063 Hamm (DE); JONAS, Ulrich, 57076 Siegen (DE)
(74) Vertreter: IPrime Bonnekamp Sparing Patentanwaltsgesellschaft mbH
(86) Internationale Anmeldenummer: PCT/DE2020/101077
(87) Internationale Veröffentlichungsnummer: WO 2021/121485

(56) Entgegenhaltungen:
- WO-A1-2018/232155
- US-A1- 2009 306 275
- US-A1- 2019 338 076
- ZHANG YUEYAN ET AL: "Inverse vulcanization of elemental sulfur and styrene for polymeric cathodes in Li-S batteries", JOURNAL OF POLYMER SCIENCE PART A: POLYMER CHEMISTRY, Bd. 55, Nr. 1, 1. Januar 2017 (2017-01-01) , Seiten 107-116, XP055789987, US ISSN: 0887-624X, DOI: 10.1002/pola.28266
- DUTKIEWICZ MICHAL ET AL: "Synthesis and flame retardant efficacy of hexakis(3-(triethoxysilyl)propyloxy)cyclot riphosphazene/silica coatings for cotton fabrics", POLYMER DEGRADATION AND STABILITY, Bd. 148, 1. Februar 2018 (2018-02-01), Seiten 10-18, XP055789989, GB ISSN: 0141-3910, DOI: 10.1016/j.polymdegradstab.2017.11.018 in der Anmeldung erwähnt

## Beschreibung

Die vorliegende Erfindung betrifft Copolymere und Formmassen mit reaktiv gebundenem Schwefel und insgesamt niedrigem Schwefelgehalt. In diesem Copolymer ist der Schwefel kovalent angebunden. Die Copolymere und Formmassen sind dabei im Wesentlichen farblos und geruchsfrei bei gleichzeitig ausreichendem Flammschutz zum Bestehen normierter Flammtests wie z. B. DIN 4102-2 (B2) und können in der Bau- und Elektroindustrie verwendet werden.

Die Ausrüstung von Styrolhomo- und -copolymeren mit Flammschutz ist für eine Vielzahl von Anwendungen von Bedeutung, beispielsweise für Polystyrol-Partikelschaumstoffe aus expandierbarem Polystyrol (EPS) oder Polystyrol-Extrusionsschaumstoffplatten (XPS) zum Isolieren von Gebäuden sowie für spritzgegossene Teile aus HIPS, ABS, ASA etc. zur Verwendung als Bauteile und Komponenten im Elektro- und Elektronikbereich.

Polymere, welche aus Styrolmonomeren aufgebaut sind, weisen eine prozentuale Gesamtproduktionsmenge von etwa 10 Gew.-% bezogen auf die gesamte weltweite Kunststoffproduktion auf und gehören somit zur viertgrößten Gruppe der weltweit produzierten Kunststoffe. Das Homopolystyrol (PS) wird überwiegend in Lebensmittelverpackungen verwendet. Zudem findet es als Partikelschaumstoff bzw. extrudierter Schaumstoff in Verpackungen und auch als Wärmedämmung seine Anwendung. Polystyrol als solches ist im Brandfall äußerst leicht entzündlich und weist keine Selbstverlöschung auf. Zudem kommt es hierbei zu starker Ruß- und Rauchgasbildung. Nur durch Zusätze von passenden Flammschutzadditivsystemen lässt sich eine flammhemmende Eigenschaft des Polymers erreichen. Aufgrund der großen Oberfläche sind in der Anwendung als Schaumstoff intumeszente und krustenbildende Flammschutzsysteme nicht ausreichend wirksam. Daher muss auf gasphasenaktive Flammschutzmittel wie z. B. bromierte Flammschutzadditive mit hierzu passenden Synergisten (z. B. die thermischen Radikalbildner Dicumylperoxid, Di-tert-butylperoxid oder Dicumyl) zurückgegriffen werden. Halogenhaltige, niedermolekulare Substanzen sind dabei typischerweise stark umweltunverträglich.

Aufgrund seiner persistenten, bioakkumulativen und toxischen Eigenschaften wurde das in der Vergangenheit in Polystyrolschaumstoffen eingesetzte Hexabromcyclododekan erst kürzlich durch ein polymeres und polybromiertes Flammschutzmittel ersetzt. Eine weitere Alternative zu den bisher beschriebenen, flammgeschützten Polystyrolpolymeren ist das Blenden von Polystyrol mit anderen, weniger brennbaren Polymeren. So ist beispielsweise in der WO 2013/028344 A1 beschrieben, dass Polystyrol mit einem halogenierten Polyphenylenether (PPE) geblendet wurde, um den notwendigen Flammschutz zu erhalten.

Um die mechanischen Eigenschaften von Styrolpolymeren einstellen zu können, kann Styrol mit unterschiedlichsten Comonomeren copolymerisiert werden. Die entsprechenden Produkte sind dann die eingesetzten Copolymere Poly(Acrylnitril-Butadien-Styrol) (ABS), Poly(Styrol-Butadien-Styrol) (SBS), Poly(Styrol-Acrylnitril) (SAN), Poly(Acrylnitril-Styrol-Acrylat) (ASA), Poly(Styrol-Butadien)kautschuk (SBR) und High Impact Polystyrol (HIPS).

In fast allen Styrolcopolymeren, so auch im Falle von HIPS, weist das Polymer durch die Modifikation mit Kautschuk eine erhöhte Schlagzähigkeit im Vergleich zu Styrolhomopolymeren auf, wodurch es in Anwendungen wie z. B. als Gehäuse für Elektrogeräte, Kühlschrankteile etc. Einsatz findet. Für diese Anwendungen muss HIPS, da es auch leicht entzündlich ist und keine selbstverlöschenden Eigenschaften aufweist, mit flammhemmenden Additiven versetzt werden. Um einen ausreichenden Flammschutz zum Bestehen von normierten Brandprüfungen wie z. B. DIN EN 60695 (analog UL94 V) zu generieren, wird HIPS typischerweise als Abmischung mit bromierten Flammschutzadditiven und Antimontrioxid (ATO) als Synergist verwendet. Um jedoch bis dato freiwillige Umweltnormen einzuhalten, wurde die Verwendung von Antimontrioxid aufgrund seiner chemischen Gefahreneinstufung in jüngster Zeit bereits zunehmend eingeschränkt.

In der WO 2011/121001 A1 und der WO 2012/089667 A1 werden schwefelhaltige Flammschutzadditive mit hohem Schwefelgehalt (>30%) beschrieben, die als Flammschutzsynergisten für phosphorhaltige Flammschutzmittel in Polystyrolschaumstoffen eingesetzt werden. Diese hochschwefelhaltigen Zusatzstoffe zeichnen sich typischerweise durch einen intensiven Geruch und durch eine kräftige, gelbe bis rotbraune Farbe aus, welches den Einsatz in vielen, insbesondere ungefärbten Kunststoffanwendungen einschränkt bzw. unmöglich macht. Weiterhin erreichen die beschriebenen Flammschutzadditive keinen ausreichenden Flammschutzeffekt in Polystyrol-Schaumstoffen, wenn diese allein und ohne phosphorhaltige Flammschutzmittel eingesetzt werden. Auch wird in den Veröffentlichungen lediglich der Einsatz als Zusatzstoff (Additiv) beschrieben, die Brennbarkeit der reinen Materialien ist nicht erwähnt.

Elementarer Schwefel als additiver Flammschutzmittelzusatzstoff in Homopolystyrol wird ebenfalls in der WO 2011/095540 A2 beschrieben, der seine Wirksamkeit allerdings nur in Kombination mit einem phosphorhaltigen Flammschutzmittel erreicht. Einzeln bleibt der Schwefel in Form eines beigemischten Flammschutzadditivs in Polystyrolschaumstoffen in Hinblick auf den Flammschutz nahezu wirkungslos. Weiterhin führt der Zusatz von elementarem Schwefel im finalen Produkt immer zu einer mehr oder weniger stark ausgeprägten Gelbfärbung, welche in vielen Anwendungen unerwünscht ist. Ebenfalls führt der elementare Schwefel im Prozess der Polymerverarbeitung und im Endprodukt dazu, dass mehr oder weniger ausgeprägte Gerüche entstehen.

Elementarer Schwefel wird neben Peroxiden weiterhin traditionell als Vernetzer zur Herstellung von elastomeren Werkstoffen und in Gummimischungen verwendet. Bekanntermaßen weisen solche mit Schwefel quervernetzten Kautschuke eine mehr oder weniger ausgeprägte Gelbfärbung und einen typischen Schwefel-Gummigeruch auf, der in vielen Anwendungen für elastomere Werkstoffe (z. B. bei Auto- oder Fahrradreifen, Dichtungsgummis etc.) billigend in Kauf genommen wird. Müssen diese elastomeren Werkstoffe jedoch zusätzliche Flammschutzanforderungen erfüllen, so ist der Zusatz von zumeist beträchtlichen Mengen an Flammschutzmitteln (typischerweise > 10 Gew.-%), zumeist auf Halogen- oder Phosphorbasis, unumgänglich. Der Einsatz solcher Elastomere in den typischen Anwendungen für Styrolpolymere sowie dessen Copolymere wie Bau und Konstruktion sowie Elektro- und Elektronik findet aufgrund der völlig andersartigen Materialeigenschaften dieser flexiblen, gummielastischen Werkstoffe nicht statt.

In der WO 2017004186 A1 ist erstmalig die flammhemmende Wirkung von hochschwefelhaltigen Duromeren beschrieben. Diese sollen zum einen als Additiv in Polyurethanschäumen, zum anderen auch als duromerer Werkstoff eingesetzt werden können. Diese Schwefelcopolymere weisen jedoch einen hohen Schwefelgehalt von > 35 Gew.% auf. Aufgrund des hohen Schwefelgehalts und des damit einhergehenden unangenehmen Geruchs, den hochschwefelhaltige Materialien aufgrund ihrer zumindest teilweise sulfidischen Struktur typischerweise absondern, ist die Verwendung dieser Duromere in vielen Kunststoffanwendungen stark eingeschränkt. Die Funktionsweise dieses Materials basiert darüber hinaus auf der Ausbildung einer stabilen Kruste sowie auf Intumeszenz (Aufschäumen und Verkleben). Bei Materialien wie geschäumten Polymeren, welche sich durch eine sehr große Oberfläche im Verhältnis zur Masse auszeichnen, bieten solche Mechanismen im Flammschutz keinen ausreichenden Schutz, um normierte Brandprüfungen zu bestehen. Testergebnisse bezüglich des Brandverhaltens dieser Polymere fehlen so auch in der WO 2017004186 A1.

In der US°2019/0338076A1 wird ein Copolymer aus Diisopropenylbenzol und Schwefel beschrieben, wobei der Schwefelgehalt des Copolymers 10% übersteigt.

Ferner ist in der US°2009/306275A1 ein sulfoniertes Styrol-Acrylnitril Copolymer beschrieben, das einen Schwefelgehalt von 1,22 % aufweist. Dieses Copolymer wird als Flammschutzmittel in Formmassen eingemischt.

Von Zhang et al. wird im Journal of Polymer Science, Part A 2017, 55, Seiten 107-116 darüber hinaus beschrieben, wie eine Umsetzung von elementarem Schwefel mit Styrol unter Erhalt von hochschwefelhaltigen Polymeren zum Einsatz als Kathodenmaterialien erfolgt. Die beschriebenen Copolymere zeichnen sich jedoch nicht nur durch einen äußerst hohen Schwefelgehalt (> 50 Gew.%) mit damit einhergehender stark rotbrauner Einfärbung und Geruchsintensität aus, sondern weisen auch ein geringes Molekulargewicht von < 3000 g/mol auf. Ein Einsatz als flammgeschützte Materialien und/oder Formmassen ist in der Veröffentlichung nicht erwähnt.

Von Dutkiewicz et al. wird schließlich im Journal Polymer Degradation and Stabiltiy 148, (2018), Seiten 10-18 der Einsatz von Cyclotriphosphazenen als flammhemmende Verbindung in Baumwolltextilien beschrieben. Der Einsatz von Cyclotriphosphazenen als flammhindernde oder flammschützende Komponente im Zusammenhang mit gering schwefelhaltigen Styrol-Copolymeren ist dort jedoch nicht offenbart.

Aufgabe der Erfindung ist es daher alternative Copolymere und/oder Formmassen zu generieren, die weitestgehend flammhemmend und geruchsneutral sind und einen geringen Schwefelgehalt aufweisen.

Diese Aufgabe wird erfindungsgemäß durch die Merkmale des unabhängigen Anspruchs 1 gelöst.

Durch die Polymerisation von Styrol und seinen Derivaten wurden in Gegenwart von Schwefel neuartige, thermoplastische Copolymere und/oder Formmassen gefunden. Diese Copolymere und/oder Formmassen weisen einen äußerst geringen Anteil an gebundenem Schwefel mit einer intrinsischen, flammhemmenden Eigenschaft auf.

Die gebildeten Co-Polymere und/oder aus ihnen gebildete Formmassen sind im Wesentlich farb- und/oder geruchlos.

Unter im Wesentlichen farblos ist dabei im Sinne der Anmeldung die Abwesenheit von sichtbaren Einfärbungen zu verstehen. Diese entsprechen den wahrgenommenen RAL-Farbtypen, beispielhaft aber nicht abschließend aufgezählt, RAL 1013 Perlweiß, 10 RAL 9001 Cremeweiß, RAL 9003 Signalweiß, RAL 9010 Reinweiß und/oder RAL 9016 Verkehrsweiß.

Unter geruchlos kann die olfaktorische Wahrnehmung von sulfidischen Verbindungen von weniger als 50 µg/m³ (beispielsweise: Schwefeldioxid), bevorzugt weniger als 5 µg/m³ (beispielsweise Schwefelwasserstoff, Dimethylsulfid, Methylmercaptan), besonders bevorzugt weniger als 0,5 µg/m³ (beispielsweise Thiophenol, Thiokresol, Diphenylsulfid, Propylmercaptan, Ethylmercaptan, Crotylmercaptan, Amylmercaptan, Benzylmercaptan, Amylmercaptan, Allylmercaptan) Luft verstanden werden, wobei die sulfidischen Verbindungen in Abhängigkeit ihrer chemischen Struktur eine unterschiedliche Geruchsschwelle aufweisen und typischerweise persönlich individuell wahrgenommen werden können.

Ein gebildetes Copolymer kann Einzelbestandteil einer Formmasse bilden oder Mitbestandteil einer Formmasse sein. Definitionsgemäß sollen unter dem Begriff "Formmasse" Copolymer-haltige Werkstoffe verstanden werden, die einen Formstoff für die Herstellung von Formkörpern bzw. Halbzeugen oder Fertigteilen bilden. Durch mechanische Krafteinwirkung und/oder erhöhte Temperatur wird durch eine Formgebung wie Pressen, Spritzpressen oder Spritzgießen in Werkzeugen und nachfolgender Abkühlung die Formmasse zu Halbzeugen oder Fertigteilen verarbeitet. Beispielhaft, aber nicht abschließend benannt, können die Copolymere der Formeln CP4 Einzelbestandteil oder Mitbestandteil einer Formmasse sein. Die Formmasse kann insofern ein einzelnes Copolymer oder auch weitere Polymere und/oder Copolymere und/oder Zuschläge enthalten.

Eine aus einer Formmasse gebildeter Formstoff wirkt bei Kontakt mit einer Flamme zumindest flammhemmend oder auch, in Abhängigkeit von den Substituenten, selbstverlöschend. Die erfindungsgemäßen Copolymere und/oder Formmassen sind frei von Antimontrioxid und können frei von halogenhaltigen Bestandteilen erhalten werden.

Erfindungsgemäß wurden Copolymere umfassende Verbindungen mit einer statistischen Monomerverteilung der Formel (7) gefunden 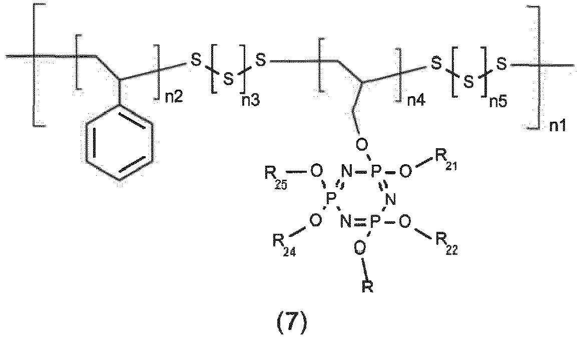 wobei
n₁= 1 - 1000
n₂= 0 -500
n₃= 0 - 1
n₄= 0 -500
n₅= 0 - 1
umfasst
und R₂₁ bis R₂₅ sind und
einen Substituenten des Typs Allyloxy (CsHeO) umfassen.

Die erfindungsgemäßen Copolymere sind als Einzelverbindung oder als Bestandteil von Formmassen bereits flammhemmend und/oder selbstverlöschend. Die flammhemmende Eigenschaft kann noch verstärkt werden, indem dem Copolymer ein phosphorbasiertes Flammschutzadditiv zugesetzt wird, beispielsweise 2,4,8,10-Tetraoxa-3,9-diphosphaspiro [5.5] undecane-3,9-dimethyl-3,9-dioxide (0,1 -10 Gew.%) oder Hexaphenoxycyclotriphosphazene (0,5 - 20 Gew.%). Insbesondere wurde herausgefunden, dass Copolymere und/oder Formmassen der Formel (7) mit Zusätzen der beispielhaft genannten phosphorbasierten Flammschutzadditive im Bereich von 4,5 Gew.% flammhemmend und/oder selbstverlöschend sind.

Ferner wurden brandhindernde Formmassen für die Polymerisation oder Extrusion gefunden, die zumindest ein brandhinderndes Copolymer mit einem Schwefelanteil von weniger als 10 % aufweisen.

Wegen der thermoplastischen Eigenschaften der Copolymere und/oder Formmassen kann durch unterschiedlichste Formgebung eine Vielzahl von Anwendungen bedient werden. Da auch Schaumkörper als Formstoff aus den Copolymeren und/oder Formmassen hergestellt werden können, können diese ihren Einsatz beispielhaft als Wärmeisolationsmaterialien finden.

Weiterhin können in die Copolymer Formmassen zusätzlich weitere Flammschutzmittel wie Melamin, Melamincyanurate, Metalloxide, Metallhydroxide, Phosphate, Phosphinate oder Blähgraphit eingesetzt werden. Geeignete zusätzliche halogenfreie Flammschutzmittel sind im Handel beispielsweise unter der Bezeichnung Exolit OP 930, Exolit OP 1312, DOPO, HCA-HQ, Cyagard RF-1241, Cyagard RF-1243, Fyrol PMP, Aluminiumhyphophosphite, Melaminpolyphosphat, Melamincyanurat und Ammoniumpolyphosphat erhältlich.

Die brandhindernden Copolymere und Schaumstoffe daraus weisen bevorzugt eine Dichte im Bereich von 5 bis 200 kg/m³, besonders bevorzugt im Bereich von 10 bis 100 kg/m³ auf und sind bevorzugt zu mehr als 80%, besonders bevorzugt zu 95 bis 100% geschlossenzellig.

Bevorzugt besteht die Polymermatrix der brandhindernden Copolymere und Copolymerschaumstoffe aus thermoplastischen (Co)Polymeren oder Polymermischungen, insbesondere Styrol(co)polymeren. Die erfindungsgemäßen, brandhindernden und expandierbaren Styrol(co)polymere (EPS) und Styrol(co)polymerextrusionschaumstoffe (XPS) können durch Einmischen eines Treibmittels in die Polymerschmelze und anschließender Extrusion und Granulierung unter Druck zu expandierbaren Granulaten (EPS) oder durch Extrusion und Entspannung unter Verwendung entsprechend geformter Düsen zu Schaumstoffplatten (XPS) oder Schaumstoffsträngen verarbeitet werden.

Unter expandierbaren Styrol(co)polymerisaten (EPS) werden Treibmittel enthaltende Styrol(co)polymerisate verstanden. Die EPS-Partikelgröße liegt bevorzugt im Bereich von 0,2 - 2 mm. Styrol(co)polymer-Partikelschaumstoffe sind durch Vorschäumen und Versintern der entsprechenden, expandierbaren Styrol(co)polymeren (EPS) erhältlich. Die Styrol(co)polymer-Partikelschaumstoffe weisen bevorzugt 2 bis 15 Zellen pro Millimeter auf.

Den erfindungsgemäßen Copolymeren oder den erfindungsgemäßen copolymerenthaltenden Formmassen können noch weitere Styrolpolymere beigemischt werden, z. B. glasklares Polystyrol (GPPS), Schlagzähpolystyrol (HIPS), anionisch polymerisiertes Polystyrol oder Schlagzähpolystyrol (A-IPS), Styrol-α-Methylstyrolcopolymere, Acrylnitril-Butadien-Styrolpolymerisate (ABS), Styrol-Acrylnitril-Polymer (SAN), Poly-Acrylnitril-Styrol-Acrylester (ASA), Polystyrolacrylate wie Polystyrolmethylacrylat (SMA) und Polystyrolmethylmethacrylat (SMMA), Methylacrylat-Butadien-Styrol-Copolymer (MBS), Methylmethacrylat-Acrylnitril-Butadien-Styrol-Polymerisate (MABS), Styrol-*N*-Phenylmaleinsäureimid-Copolymere (SPMI) oder Mischungen davon oder Mischungen der genannten Styrol(co)polymere mit Polyolefinen wie Polyethylen oder Polypropylen und Polyphenylenether (PPE).

Die genannten Styrolcopolymere können zur Verbesserung der mechanischen Eigenschaften oder der Temperaturbeständigkeit gegebenenfalls unter Verwendung von Verträglichkeitsvermittlern mit thermoplastischen Polymeren wie Polyamiden (PA), Polyolefinen wie Polypropylen (PP) oder Polyethylen (PE), Polyacrylaten wie Polymethylmethacrylat (PMMA), Polycarbonat (PC), Polyestern wie Polyethylenterephthalat (PET) oder Polybutylenterephthalat (PBT), Polyethersulfonen (PES), Polyetherketonen oder Polyethersulfiden (PES) oder Mischungen davon in der Regel in Anteilen von insgesamt bis maximal 30 Gew.%, bevorzugt im Bereich von 1 bis 10 Gew.% bezogen auf die Polymerschmelze, abgemischt werden. Des Weiteren sind Mischungen in den genannten Mengenbereichen auch mit z. B hydrophob modifizierten oder funktionalisierten Polymeren oder Oligomeren, Kautschuken wie Polyacrylaten oder Polydienen wie z. B. Styrol-Butadien-Blockcopolymeren oder biologisch abbaubaren, aliphatischen oder aliphatisch/aromatischen Copolyestern möglich.

Als Verträglichkeitsvermittler eignen sich z. B. mit Maleinsäureanhydrid modifizierte Styrolcopolymere, Epoxidgruppen-haltige Polymere oder Organosilane.

Den Styrolcopolymeren können im Herstellungsverfahren auch Polymerrecyclate der genannten thermoplastischen Polymere, insbesondere Styrol(co)polymere und expandierbare Styrol(co)polymere (EPS) in Mengen von maximal 50 Gew.%, insbesondere in Mengen von 1 bis 20 Gew.%. zugemischt werden, ohne dass die flammhemmenden oder selbstverlöschenden Eigenschaften der Copoylmere und/oder Formmassen wesentlich verändert werden.

Für hochtemperaturbeständige Schaumstoffe werden bevorzugt Mischungen aus SMA und SAN bzw. SAN und SPMI eingesetzt. Der Anteil wird entsprechend der gewünschten Wärmeformbeständigkeit gewählt. Der Acrylnitrilgehalt in SAN beträgt bevorzugt 25 bis 33 Gew.%. Der Methacrylat-Anteil in SMA beträgt bevorzugt 25 bis 30 Gew.%.

Die Styrol(co)polymerisate können die üblichen und bekannten Hilfsmittel und Zusatzstoffe enthalten, beispielsweise Flammschutzmittel, Füllstoffe, Keimbildner, UV-Stabilisatoren, Kettenüberträger, Treibmittel, Weichmacher, Antioxidantien, lösliche und unlösliche anorganische und/oder organische Farbstoffe und Pigmente, z. B. Infrarot (IR)-Absorber wie Ruß, Graphit oder Aluminiumpulver. In der Regel werden die Farbstoffe und Pigmente in Mengen im Bereich von 0,01 bis 30 Gew.%, bevorzugt im Bereich von 1 bis 5 Gew.% zugesetzt. Zur homogenen und mikrodispersen Verteilung der Pigmente in dem Styrolcopolymer kann es insbesondere bei polaren Pigmenten zweckmäßig sein, ein Dispergierhilfsmittel wie z. B. Organosilane, Epoxygruppenhaltige Polymere oder Maleinsäureanhydrid-gepfropfte Styrolpolymere einzusetzen. Bevorzugte Weichmacher sind Mineralöle und Phthalate, die in Mengen von 0,05 bis 10 Gew.% bezogen auf das Styrol(co)polymerisat eingesetzt werden können.

Die Menge der eingesetzten IR-Absorber richtet sich nach deren Art und Wirkung. Die Styrol(co)polymer-Partikelschaumstoffe enthalten bevorzugt 0,5 bis 5 Gew.%, besonders bevorzugt 1 bis 4 Gew.% IR-Absorber. Bevorzugt werden als IR-Absorber Graphit, Ruß oder Aluminium mit einer mittleren Teilchengröße im Bereich von 1 bis 50 µm verwendet.

Der bevorzugt eingesetzte Graphit hat vorzugsweise eine mittlere Partikelgröße von 1 bis 50 µm, insbesondere von 2,5 bis 12 µm, ein Schüttgewicht von 100 bis 500 kg/m³ und eine spezifische Oberfläche von 5 bis 20 m²/g. Es kann Naturgraphit oder gemahlener, synthetischer Graphit eingesetzt werden. Die Graphitpartikel sind im Styrol(co)polymerisat vorzugsweise in Mengen von 0,05 bis 8 Gew.%, insbesondere von 0,1 bis 5 Gew.% enthalten.

Ein Problem bei der Verwendung von Graphitpartikeln besteht in der leichten Brennbarkeit der Graphitpartikel enthaltenden Styrol(co)polymer-Partikelschaumstoffe. Um die für den Einsatz im Bauwesen notwendigen Brandtests (B1 und B2 nach DIN 4102) zu bestehen, können erfindungsgemäß den expandierbaren Styrol(co)polymerisaten die oben genannten Flammschutzmittel zugesetzt werden. Überraschenderweise führen diese Flammschutzmittel zu keinerlei Beeinträchtigung der mechanischen Kennwerte der Ruß oder Graphit enthaltenden Polystyrol(co)polymer-Partikelschaumstoffe.

Die Herstellung der besonders bevorzugten, expandierbaren Styrol(co)polymerisate (EPS) kann nach unterschiedlichen Verfahren erfolgen.

Bei einer Ausführungsform vermischt man athermane Partikel und ein nichtionisches Tensid mit einer Schmelze des Styrol(co)polymerisats, vorzugsweise in einem Extruder. Dabei wird gleichzeitig das Treibmittel in die Schmelze zudosiert. Unter athermanen Partikeln versteht man hierbei Partikel, welche für infrarote Strahlung (Wärmestrahlung) undurchlässig sind.

Man kann die athermanen Partikel auch in eine Schmelze von treibmittelhaltigem Styrol(co)polymerisat einarbeiten, wobei zweckmäßigerweise ausgesiebte Randfraktionen eines Perlspektrums von bei einer Suspensionspolymerisation entstandenen, treibmittelhaltigen Polystyrolperlen eingesetzt werden. Die Treibmittel und die athermanen Partikel enthaltende Styrol(co)polymerschmelzen werden ausgepresst und zu treibmittelhaltigem Granulat zerkleinert. Da die athermanen Partikel stark nukleierend wirken können, sollte nach dem Auspressen unter Druck rasch abgekühlt werden, um ein Aufschäumen zu vermeiden. Man führt daher zweckmäßigerweise eine Unterwassergranulierung unter Druck in einem geschlossenen System durch.

Es ist auch möglich, den atherman Partikel enthaltenen Styrol(co)polymerisaten das Treibmittel in einem gesonderten Verfahrensschritt zuzusetzen. Hierbei werden die Granulate dann vorzugsweise in wässriger Suspension mit dem Treibmittel imprägniert.

In allen drei Fällen kann man die feinteiligen, athermanen Partikel und das nichtionische Tensid direkt einer Styrol(co)polymerschmelze zusetzen. Man kann die athermanen Partikel aber auch in Form eines Konzentrats in Polystyrol der Schmelze zusetzen. Bevorzugt werden aber Styrol(co)polymer-Granulat und athermane Partikel zusammen in einen Extruder eingegeben, das Styrol(co)polymer aufgeschmolzen und mit den athermanen Partikeln vermischt.

Besonders bevorzugt werden die expandierbaren Styrol(co)polymerisate (EPS) durch Polymerisation von Styrol und gegebenenfalls den copolymerisierbaren Monomeren der erfindungsgemäßen Copolymere in wässriger Suspension und Imprägnierung mit einem Treibmittel hergestellt, wobei die Polymerisation in Gegenwart von 0,1 bis 5 Gew.% Graphitpartikeln bezogen auf das Styrol(co)polymer und einem nichtionischen Tensid durchgeführt wird. Als nichtionisches Tensid eignen sich beispielsweise Maleinsäureanhydrid-Copolymere (MSA) z. B. aus Maleinsäureanhydrid und C₂₀₋₂₄-olefin, Polyisobutylen-Bernsteinsäureanhydrid (PIBSA) oder deren Umsetzungsprodukte mit Hydroxy-Polyethylengylcolester, Diethylaminoethanol oder Aminen wie Tridecylamin, Octylamin oder Polyetheramin, Tetraethylenpentamin oder Mischungen davon. Die Molekulargewichte des nichtionischen Tensids liegen bevorzugt im Bereich von 500 bis 3000 g/mol. Sie werden in der Regel in Mengen im Bereich von 0,01 bis 2 Gew.% bezogen auf Styrol(co)polymer eingesetzt.

Die expandierbaren, athermane Partikel enthaltenden Styrol(co)polymerisate können zu Styrol(co)polymerschaumstoffen mit Dichten von 5 - 200 kg/m³, bevorzugt von 7 bis 100 kg/m³ und insbesondere von 10 - 80 kg/m³, verarbeitet werden.

Hierzu werden die expandierbaren Partikel vorgeschäumt. Dies geschieht zumeist durch Erwärmen der Partikel mit Wasserdampf in sogenannten Vorschäumern. Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

Die aus den erfindungsgemäßen, expandierbaren Styrol(co)polymerisaten hergestellten Schaumstoffe zeichnen sich durch eine hervorragende Wärmeisolierung aus. Dieser Effekt zeigt sich besonders deutlich bei niedrigen Dichten.

Die Schaumstoffe können zur Wärmedämmung von Gebäuden und Gebäudeteilen, zur thermischen Isolierung von Maschinen und Haushaltsgeräten sowie als Verpackungsmaterialien verwendet werden.

Zur Herstellung der expandierbaren Styrol(co)polymerisate kann das Treibmittel in die Polymerschmelze eingemischt werden. Ein mögliches Verfahren umfasst die Stufen a) Schmelzerzeugung, b) Mischen, c) Kühlen, d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind z. B.:
a) Polymerisationsreaktor - statischer Mischer/Kühler- Granulator
b) Polymerisationsreaktor - Extruder- Granulator
c) Extruder - statischer Mischer - Granulator
d) Extruder - Granulator

Die treibmittelhaltige Styrol(co)polymerschmelze wird in der Regel mit einer Temperatur im Bereich von 140 bis 300 °C, bevorzugt im Bereich von 160 bis 240 °C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Styrol(co)polymerschmelze beheizt. Bevorzugt liegt die Temperatur der Düsenplatte im Bereich von 20 bis 100 °C über der Temperatur der treibmittelhaltigen Styrol(co)polymerschmelze. Dadurch werden Polymerablagerungen in den Düsen verhindert und eine störungsfreie Granulierung gewährleistet.

Um marktfähige Granulatgrößen zu erhalten, sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 1,4 mm gezielt einstellen.

Besonders bevorzugt wird ein Verfahren zur Herstellung von brandhindernden, expandierbaren Styrol(co)polymeren (EPS) umfassend die Schritte
a) Einmischen eines organischen Treibmittels in die Polymerschmelze der erfindungsgemäßen Copolymere und/oder Abmischungen daraus mittels statischer oder dynamischer Mischer bei einer Temperatur von mindestens 150°C,
b) Kühlen der Treibmittel-Styrol(co)polymerschmelze auf eine Temperatur von 120 bis 200 °C
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 20 bar.

Es ist auch möglich, die erfindungsgemäßen Copolymere und/oder Formmassen durch Suspensionspolymerisation herzustellen. Bei der Suspensionspolymerisation werden als Monomere bevorzugt Styrol und Schwefel allein eingesetzt. Es kann jedoch bis zu 50 % seines Gewichts durch andere, ethylenisch ungesättigte Monomere ersetzt sein.

Bei der Suspensionspolymerisation können die üblichen Hilfsmittel wie z. B. Peroxidinitiatoren, Suspensionsstabilisatoren, Treibmittel, Kettenüberträger, Expandierhilfsmittel, Keimbildner und Weichmacher zugesetzt werden. Treibmittel werden in Mengen von 3 bis 10 Gew.%, bezogen auf das bzw. die Monomer/e zugesetzt. Man kann sie vor, während oder nach der Polymerisation der Suspension zusetzen. Geeignete Treibmittel sind aliphatische Kohlenwasserstoffe mit 4 bis 6 Kohlenstoffatomen. Es ist vorteilhaft, als Suspensionsstabilisatoren anorganische Pickering-Dispergatoren wie z. B. Magnesiumpyrophosphat oder Calciumphosphat einzusetzen.

Bei der Suspensionspolymerisation entstehen perlförmige, im Wesentlichen runde Teilchen mit einem mittleren Durchmesser im Bereich von 0,2 bis 2 mm.

Zur Verbesserung der Verarbeitbarkeit können die fertigen, expandierbaren Styrol(co)polymerperlen und -granulate mit den üblichen und bekannten Beschichtungsmitteln wie beispielsweise Metallstearaten, Glycerinestern und feinteiligen Silikaten, Antistatika oder Antiverklebungsmittel beschichten werden.

Das EPS-Granulat kann mit Glycerinmonostearat (GMS, typischerweise 0,25 Gew.%), Glycerintristearat (typischerweise 0,25 Gew.%), feinteiliger Kieselsäure (Aerosil R972, typischerweise 0,12 Gew.%) und Zink-Stearat (typischerweise 0,15 Gew.%) sowie Antistatikum beschichtet werden.

Die erfindungsgemäßen, expandierbaren Styrol(co)polymerteilchen können in einem ersten Schritt mittels Heißluft oder Wasserdampf zu Schaumpartikeln mit einer Dichte im Bereich von 20 bis 500 kg/m³, insbesondere 10 bis 100 kg/m³ vorgeschäumt und in einem 2. Schritt in einer geschlossenen Form zu Partikelformteilen verschweißt werden.

Die expandierbaren Styrol(co)polymerteilchen können zu Polystyrolschaumstoffen mit Dichten von 8 bis 200 kg/m³, bevorzugt von 10 bis 100 kg/m³ verarbeitet werden. Hierzu werden die expandierbaren Partikel vorgeschäumt. Dies geschieht zumeist durch Erwärmen der Partikel mit Wasserdampf in sogenannten Vorschäumern. Die so vorgeschäumten Partikel werden danach zu Formkörpern bzw. Halbzeugen oder Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

### Beispiele

### Synthesen:

### Verwendete Materialien:

Für die durchgeführten Synthesen wurden Styrol (99%, Acros Organics / Katalysator entfernt), Schwefel (>99%, Alfa Aesar), Divinylbenzol (Merck KGaA, enthält 25 - 50% Ethylstyrol) und Hexakisallyloxycyclotriphosphazen (synthetisch zugänglich nach M. Dutkiewicz et al., Polymer Degradation and Stability 2018, 148, 10 - 18;) verwendet.

### Copolymer CP4 Poly-S(1)-Sty(96)-CTP(3)

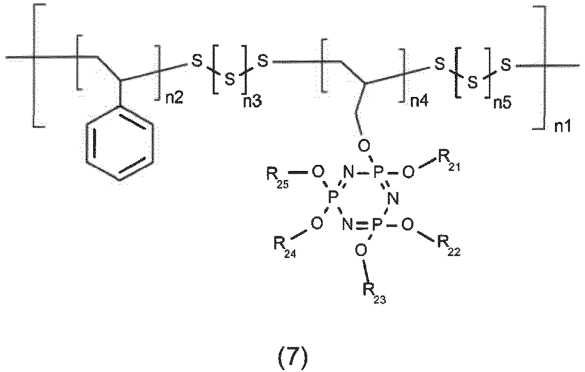

mit
n₁= 1 - 1000
n₂= 0 -500
n₃= 0 - 1
n₄= 0 -500
n₅= 0 - 1 und
R₂₁ bis R₂₅ gleich oder verschieden sind und
ein Polymer nach Formel (1) und/oder
einen Substituenten des Typs Allyloxy (C₃H₆O) umfassen.

Schwefel (50 mg, 1 Gew.%), Styrol (4800 mg, 96 Gew.%) und Hexakisallyloxycyclotriphosphazen (150 mg, 3 Gew.%) wurden miteinander gemischt und durch drei Freeze-Thaw-Zyklen sauerstofffrei gemacht. Die Mischung wurde für 72 h auf 130 °C erhitzt. Nach Lösen in THF wurde das Produkt durch Fällung in Methanol isoliert.
EA: C (%) = 90,5; H (%) =8,18; S (%) =0,23; N (%) =0,24;
TGA: Td_{5%} (°C) = 304;
DSC: T_{g} (°C) = 82;
GPC: M_{w} (kDa) = 70; Mₙ (kDa) = 32.

Verwendete Polymere und Zuschlagsstoffe für die Herstellung der brandhindernden Formmassen:

| Polymer / Zuschlagsstoff | Typ und Hersteller | Kürzel |
|---|---|---|
| Polystyrol | Polystyrol 158K, BASF SE, Ludwigshafen, Deutschland | PS |
| 2,4,8,10-Tetraoxa-3,9-diphosphaspiro [5.5] undecane-3,9-dimethyl-3,9-dioxide | Aflammit PCO 900, Thor GmbH, Speyer, Deutschland | P1 |
| Hexaphenoxycyclotriphosphazene | aber GmbH, Karlsruhe, Deutschland | P2 |

### Herstellung der Brandprüfprobekörper

### VB1 und VB4:

Zunächst wurden 20 g PS in Dichlormethan gelöst. Anschließend wurde die Lösung in eine 20 cm x 10 cm Aluminiumform gefüllt und bei Raumtemperatur (RT) für 24 h getrocknet. Das getrocknete Polymer wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### VB2 und VB5:

Zunächst wurden 20 g PS und 0,5 g P1 in Dichlormethan gelöst. Anschließend wurde die Lösung in eine 20 cm x 10 cm Aluminiumform gefüllt und bei Raumtemperatur (RT) für 24 h getrocknet. Der getrocknete Compound wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### VB3 und VB6:

Zunächst wurden 20 g PS und 0,95 g P2 in Dichlormethan gelöst. Anschließend wurde die Lösung in eine 20 cm x 10 cm Aluminiumform gefüllt und bei Raumtemperatur (RT) für 24 h getrocknet. Der getrocknete Compound wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### EB6 und EB9:

Zunächst wurden 20 g CP4 in Dichlormethan gelöst. Anschließend wurde die Lösung in eine 20 cm x 10 cm Aluminiumform gefüllt und bei Raumtemperatur (RT) für 24 h getrocknet. Das getrocknete Copolymer wurde aus der Aluminiumform gelöst und in einer Lochedelstahlform für 20 min mit Wasserdampf aufgeschäumt. Der geschäumte Prüfkörper wurde für 24 h bei 50 °C bis zur Massekonstanz getrocknet. Die daraus entstandenen Prüfkörper weisen eine Dichte von ca. 70 kg/m³ auf.

### Durchführung der Brandprüfungen

### Screeningtest:

Ein 5 cm x 10 cm x 1 cm Streifen des Schaumkörpers wurde für wenige Sekunden in eine 2 cm hohe Propangasflamme mit einer Energie von ca. 50 kW gehalten. Sobald sich die Probe entzündet hat, jedoch maximal nach 5 s, wurde diese aus der Flamme gezogen und die Entzündbarkeit sowie Selbstverlöschung der Probe protokolliert. Unter Selbstverlöschung wird im Screeningtest das folgende Verhalten verstanden: Der durch die Flamme des Brenners entzündete Probenkörper erlischt innerhalb von 5 s nachdem die Brennerflamme vom Probekörper entfernt wurde.

### Brandprüfung nach DIN 4102-2 (B2):

Eine 20 cm x 10 cm x 1 cm Probe wurde mit einem Brenner mit einer Energie von ca. 50 kW, der eine Flammenhöhe von 2 cm aufweist, mit einem senkrechten Abstand von 1 cm zur Unterseite der Probe für 15 s beflammt. Die Nachbrennzeit, Flammenhöhe sowie Selbstverlöschung und brennendes Abtropfverhalten der Probe wurden notiert.

### Elementaranalyse:

Die Messung der elementaren Zusammensetzung der Proben wurde mit einem vario MICRO cube (Elementar Analysesysteme GmbH, Langenselbold) gemessen. Die Kalibrierung der Messmethode wurde mit Sulfanilamid durchgeführt.

### Gelpermeationschromatographie:

Die Messung des Molekulargewichtes und der Molekulargewichtsverteilung der Proben wurden mit einem GPC-Analysesystem von Shimadzu (Kyoto, Japan) bestehend aus einem Degasser (DGU-20A_{3R}), zwei Pumpen (LC-20AD), einem Autosampler (SIL-20A_{HT}), einem Säulenofen (CTO-20A, 30°C), einem Diodenarraydetektor (SPD-M20A, 30°C), einem Brechungsindexdetektor (RID-20A, 30°C), einer Steuerungseinheit (CBM-20A) und einem Säulenset (PSS Polymer Standard Services GmbH, Mainz - eine Vorsäule SDV 50x8 mm, 5 µm, zwei Trennsäulen SDV 300x8 mm, 5 µm, 1000 Å, eine Trennsäule SDV 300x8 mm, 5 µm, 100.000 Å), gemessen. Die Kalibrierung wurde mit Polystyrol-Standards durchgeführt.

Die elementare Zusammensetzung, die Molekulargewichte und -verteilungen sowie die thermischen Kenndaten der synthetisierten Copolymere sind in den nachfolgenden Tabellen 1 und 2 dargestellt.

**Tabelle 1:**

| Elementare Zusammensetzung der synthetisierten Copolymere: | | | | |
|---|---|---|---|---|
| Probe | C (%)¹ | H (%)¹ | S (%)¹ | N (%)¹ |
| PS | 92,3² | 7,74² | 0,00² | 0,00² |
| CP4 | 90,5 | 8,18 | 0,23 | 0,24 |

| | | | | |
|---|---|---|---|---|
| ¹ prozentuale elementare Zusammensetzung mittels Elementaranalyse bestimmt, ² theoretisch berechneter Wert | | | | |

**Tabelle 2:**

| Molekulargewichte und -verteilungen und thermische Kenndaten der Copolymere: | | | | | |
|---|---|---|---|---|---|
| Probe | Mn¹ (kDa) | Mw¹ (kDa) | *Ð*¹ | Td_{5%}² (°C) | Tg³ (°C) |
| PS | 144 | 257 | 1,78 | 386 | 101 |
| CP4 | 32 | 70 | 2,19 | 304 | 82 |

| | | | | | |
|---|---|---|---|---|---|
| ¹ mittlere Molekulargewichte und deren Molekulargewichtsverteilung mittels GPC bestimmt, ² Zersetzungstemperatur bei 5% Masseverlust mittels TGA bestimmt, ³ Onset der Glasübergangstemperatur mittels DSC bestimmt. | | | | | |

### Brandprüfergebnisse:

### A. Screeningtest:

**Tabelle 3:**

| Beispiel | Zusammensetzung | Anteil (Co)Polymer (phr¹) | Anteil P1 bzw. P2 (phr¹) | Selbstverlöschend (ja/nein) |
|---|---|---|---|---|
| VB1 | PS | 100 | - | nein |
| VB2 | PS + P1 | 100 | 2,50 | nein |
| VB3 | PS + P2 | 100 | 4,75 | nein |
| EB6 | CP4 | 100 | - | Ja |

| | | | | |
|---|---|---|---|---|
| ¹ parts per hundred rubber | | | | |

### B. Kleinbrennerprüfung nach DIN 4102-2 (B2):

**Tabelle 4:**

| Beispiel | Zusammensetzung | Anteil (Co)Polymer (phr¹) | Anteil P1 bzw. P2 (phr¹) | Flammenhöhe (cm) | Nachbrennzeit (s) |
|---|---|---|---|---|---|
| VB4 | PS | 100 | - | > 15 | 31 |
| VB5 | PS + P1 | 100 | 2,50 | > 15 | 35 |
| VB6 | PS + P2 | 100 | 4,75 | > 15 | 22 |
| EB9 | CP4 | 100 | - | 12 | 12,8 |

| | | | | | |
|---|---|---|---|---|---|
| ¹ parts per hundred rubber | | | | | |

## Patentansprüche

1. Brandhindemdes Copolymer nach Formel (7) mit einer statistischen Monomerverteilung mit 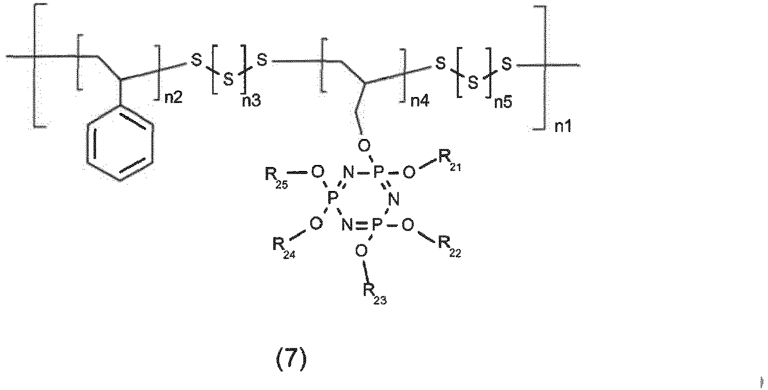 wobei
n₁= 1 - 1000
n₂= 1 -500
n₃= 0 - 1
n₄= 1 -500
n₅= 0 - 1
umfasst
und R₂₁ bis R₂₅ gleich sind umfassend einen Substituenten des Typs Allyloxy (C₃H₆O) und der Schwefelgehalt ≤ 10 Gew. % innerhalb des brandhindernden Copolymers beträgt.

2. Brandhinderndes Copolymer nach Anspruch 1,
wobei das Copolymer farb- und/oder geruchlos ist und sich die Farblosigkeit auf einer Farbskala nach RAL 1013 Perlweiß, RAL 9001 Cremeweiß, RAL 9003 Signalweiß, RAL 9010 Reinweiß und/oder RAL 9016 Verkehrsweiß bestimmt und/oder die Geruchslosigkeit in der Wahrnehmungsgrenze von sulfidischen Verbindungen im Bereich von weniger als 5 µg/m³ Luft liegt.

3. Brandhinderndes Copolymer nach einem der Ansprüche 1 oder 2,
wobei das Copolymer selbstverlöschend im Sinne von DIN 4102-2 (B2) ist.

4. Brandhindernde Formmasse für die Polymerisation oder Extrusion zumindest ein brandhinderndes Copolymer aufweisend nach einem der Ansprüche 1 bis 3 und aufweisend ein weiteres Polymer, das ausgeswählt ist aus homopolymeren Polystyrolen (PS) oder expandierbarem Styrolpolymeren (EPS) oder Extrusionsschaumstoffplatten (XPS).

5. Brandhindernde Formmasse nach Anspruch 4, wobei das weitere Polymer Polystyrol beinhaltet.

6. Brandhindernde Formmasse nach Anspruch 4 oder 5, wobei das brandhindernde Polymer 2,4,8,10-Tetraoxa-3,9-diphosphaspiro [5.5] undecane-3,9-dimethyl-3,9-dioxide (0,1 - 10 Gew.%) oder Hexaphenoxycyclotriphosphazen (0,5 - 20 Gew.%) umfasst.

7. Brandhindernde Formmasse nach einem der Ansprüche 4 bis 6, wobei die Formmasse selbstverlöschend im Sinne von DIN 4102-2 (B2) ist.

8. Brandhindernde Formmasse nach einem der Ansprüche 4 bis 7, wobei die polymerisierte oder extrudierte Frommasse farb- und/oder geruchlos ist und sich die Farblosigkeit auf einer Farbskala nach RAL 1013 Perlweiß, RAL 9001 Cremeweiß, RAL 9003 Signalweiß, RAL 9010 Reinweiß und/oder RAL 9016 Verkehrsweiß bestimmt und/oder die Geruchslosigkeit in der Wahrnehmungsgrenze von sulfidischen Verbindungen im Bereich von weniger als 5 µg/m³ Luft liegt.

9. Brandhindernde Formmasse nach einem der Ansprüche 4 bis 8, wobei die Formmasse mindestens einen IR-Absorber, insbesondere Graphit, Ruß oder Aluminium mit einer mittleren Teilchengröße im Bereich von 1 bis 50 µm enthält.

10. Brandhindernde Formmasse nach einem der Ansprüche 4 bis 9, wobei mit der Formmasse erzeugte Formstoffe, insbesondere die Schaumstoffe eine Dichte von 5 bis 150 kg/m³ aufweisen.

11. Verfahren zur Herstellung von Formmassen nach einem der Ansprüche 4 bis 10 umfassend die Schritte
a. Einmischen eines organischen Treibmittels in eine Polymerschmelze umfassend mindestens ein brandhinderndes Copolymer mit oder ohne phosphorhaltige Zuschläge mittels statischer und/oder dynamischer Mischer bei einer Temperatur von mindestens 150°C,
b. Kühlen der treibmittelhaltigen Polymerschmelze auf eine Temperatur von mindestens 120°C,
c. Austrag durch eine Düsenplatte mit Bohrungen, deren Durchmesser am Düsenaustritt höchstens 1,5 mm beträgt und
d. Granulieren der treibmittelhaltigen Schmelze direkt hinter der Düsenplatte unter Wasser bei einem Druck im Bereich von 1 bis 20 bar.

12. Verfahren zur Herstellung von Formmassen nach einem der Ansprüche 4 bis 11, umfassend die Schritte:
a. Polymerisation,
b. Zugabe eines organischen Treibmittels vor, während und/oder nach der Polymerisation und
c. Abtrennen der expandierbaren, treibmittelhaltigen Copolymere durch Sieben.

13. Verwendung von brandhindernden Copolymeren oder Formmassen nach einem der Ansprüche 1 bis 12 als Einzel- oder Co-Bestandteil von Dämm- oder Isoliermaterial für Gebäude oder als Bauteil und Komponente im Elektro- und Elektronikbereich.

14. Verwendung von brandhindernden Copolymeren oder Formmassen nach einem der Ansprüche 1 bis 12, wobei die Copolymere oder Formmassen halogenfrei sind.

## Claims

1. A fire-retardant copolymer according to formula (7) having a statistical monomer distribution with 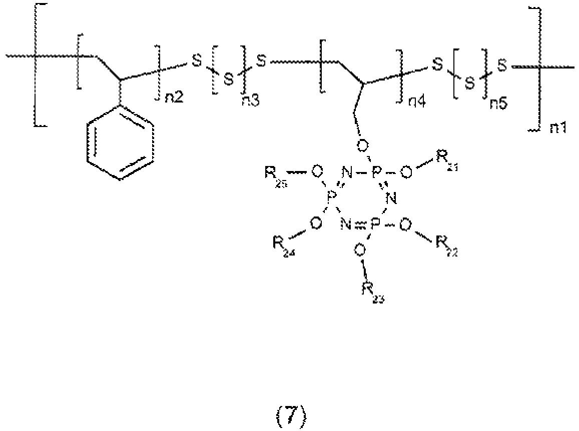 wherein
n₁ = 1-1000
n₂ = 1-500
n₃ = 0-1
n₄ = 1-500
n₅ = 0-1
is comprised
and R21 to R25 are equal and are comprising a substituent of the allyloxy (CsHsO) type and the sulfur content is ≤ 10 % by weight within the fire-retardant copolymer.

2. The fire-retardant copolymer according to claim 1,
wherein the copolymer is colorless and/or odorless and the colorlessness is determined on a color scale according to RAL 1013 Oyster white, RAL 9001 Cream, RAL 9003 Signal white, RAL 9010 Pure white and/or RAL 9016 Traffic white and/or the odorlessness is within the detection limit of sulfide compounds within the range of less than 5 µg/m³ of air.

3. The fire-retardant copolymer according to one of claims 1 or 2,
wherein the copolymer is self-extinguishing as defined in DIN EN 60695 or UL94 V.

4. A fire-retardant molding compound for polymerization or extrusion having at least one fire-retardant copolymer having a statistical monomer distribution and a sulfur content of less than 10% by weight, wherein the fire-retardant molding compound comprises a least one polymer other than the fire-retardant copolymer according to any of the claims 1 to 3.

5. The fire-retardant molding compound according to claim 4, wherein the further polymer comprises polystyrene.

6. The fire-retardant molding compound according to claim 4 or 5 wherein the fire-retardant polymer is comprising 2,4,8,10-tetraoxa-3,9-diphosphaspiro [5.5] undecane-3,9-dimethyl-3,9-dioxide (0.1-10% by weight) or hexaphenoxycyclotriphosphazene (0.5-20% by weight).

7. The fire-retardant molding compound according to any of claims 4 to 6, wherein the molding compound is self- extinguishing as defined in DIN EN 60695 or UL94 V.

8. The fire-retardant molding compound according to any of the claims 4 to 7 wherein the polymerized or extruded molding compound is colorless and/or odorless and the colorlessness is determined on a color scale according to RAL 1013 Oyster white, RAL 9001 Cream, RAL 9003 Signal white, RAL 9010 Pure white and/or RAL 9016 Traffic white and/or the odorlessness is within the detection limit of sulfide compounds within the range of less than 5 µg/m³ of air.

9. The fire-retardant molding compound according to any of claims 4 to 8, wherein the molding compound contains at least one IR absorber, in particular graphite, carbon black or aluminum having an average particle size within the range from 1 to 50 µm.

10. The fire-retardant molding compound according to any of claims 4 to 9, wherein molding materials produced with the molding composition, in particular the foams, have a density of 5 to 150 kg/m³.

11. A method for producing molding compounds according to any of claims 4 to 10, comprising the steps:
a. mixing an organic blowing agent into a polymer melt comprising at least one fire-retardant copolymer having or not having phosphorus-containing additives by means of static and/or dynamic mixers at a temperature of at least 150°C,
b. cooling the blowing agent-containing polymer melt to a temperature of at least 120°C,
c. discharging through a nozzle plate having holes whose diameter at the nozzle outlet is at most 1.5 mm and
d. granulating the blowing agent-containing melt directly behind the nozzle plate under water at a pressure within the range of 1 to 20 bar.

12. A method for producing molding compounds according to any of claims 4 to 11, comprising the steps:
a. polymerization,
b. adding an organic blowing agent before, during and/or after the polymerization and
c. separating the expandable, blowing agent-containing copolymers by means of sieving.

13. Use of fire-retardant copolymers or molding compounds according to any of claims 1 to 12 as an individual or co-component of insulating material for buildings or as a structural part and component in the electrical and electronics sector.

14. Use of fire-retardant copolymers or molding compounds according to any of claims 1 to 12, wherein the copolymers or molding compounds are halogen-free.

## Revendications

1. Copolymère ignifuge de formule (7) comportant une distribution de monomères statistique comportant 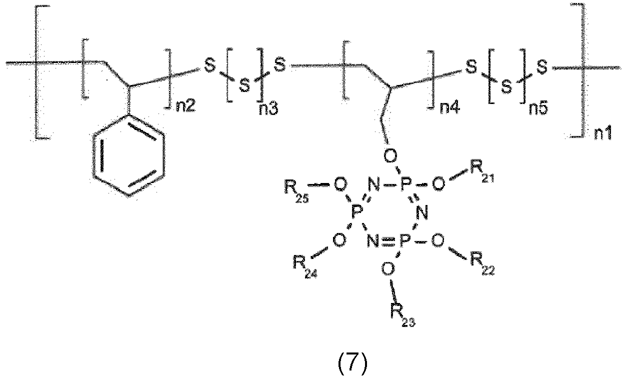 laquelle comprend
n₁ = 1 à 1 000
n₂ = 1 à 500
n₃ = 0 à 1
n₄ = 1 à 500
n₅ = 0 à 1
et R₂₁ à R₂₅ sont identiques et comprenant un substituant du type allyloxy (CsHsO) et la teneur en soufre est ≤ 10 % en poids dans le copolymère ignifuge.

2. Copolymère ignifuge selon la revendication 1,
dans lequel le copolymère est incolore et/ou inodore et l'absence de couleur est déterminée sur une échelle de couleurs selon les couleurs RAL 1013 blanc perlé, RAL 9001 blanc crème, RAL 9003 blanc de sécurité, RAL 9010 blanc pur et/ou RAL 9016 blanc signalisation et/ou l'absence d'odeur se situe dans le seuil de perception de composés sulfurés dans la plage de moins de 5 µg/m³ d'air.

3. Copolymère ignifuge selon l'une des revendications 1 ou 2, dans lequel le copolymère est autoextinguible au sens de la norme DIN 4102-2 (B2).

4. Matière de moulage ignifuge pour la polymérisation ou l'extrusion présentant au moins un copolymère ignifuge selon l'une des revendications 1 à 3 et présentant un autre polymère qui est choisi parmi les polystyrènes homopolymères (PS) ou les polymères styréniques expansibles (EPS) ou les plaques de mousse d'extrusion (XPS).

5. Matière de moulage ignifuge selon la revendication 4, dans laquelle l'autre polymère contient du polystyrène.

6. Matière de moulage ignifuge selon la revendication 4 ou 5, dans laquelle le polymère ignifuge comprend du 2,4,8,10-tétraoxa-3,9-diphosphaspiro [5.5] undécane-3,9-diméthyl-3,9-dioxyde (0,1 à 10 % en poids) ou de l'hexaphénoxycyclotriphosphazène (0,5 à 20 % en poids).

7. Matière de moulage ignifuge selon l'une des revendications 4 à 6, dans laquelle la matière de moulage est autoextinguible au sens de la norme DIN 4102-2 (B2).

8. Matière de moulage ignifuge selon l'une des revendications 4 à 7, dans laquelle la matière de moulage polymérisée ou extrudée est incolore et/ou inodore et l'absence de couleur est déterminée sur une échelle de couleurs selon les couleurs RAL 1013 blanc perlé, RAL 9001 blanc crème, RAL 9003 blanc de sécurité, RAL 9010 blanc pur et/ou RAL 9016 blanc signalisation et/ou l'absence d'odeur se situe dans le seuil de perception de composés sulfurés dans la plage de moins de 5 µg/m³ d'air.

9. Matière de moulage ignifuge selon l'une des revendications 4 à 8, dans laquelle la matière de moulage contient au moins un absorbeur d'IR, en particulier du graphite, du noir de carbone ou de l'aluminium comportant une taille moyenne des particules dans la plage allant de 1 à 50 µm.

10. Matière de moulage ignifuge selon l'une des revendications 4 à 9, dans laquelle des matériaux de moulage produits avec la matière de moulage, en particulier les mousses, présentent une densité allant de 5 à 150 kg/m³.

11. Procédé de fabrication de matières de moulage selon l'une des revendications 4 à 10, comprenant les étapes consistant à
a. mélanger un agent gonflant organique dans une masse fondue de polymères comprenant au moins un copolymère ignifuge, avec ou sans additifs contenant du phosphore, au moyen d'un mélangeur statique et/ou dynamique à une température d'au moins 150 °C,
b. refroidir la masse fondue de polymères contenant l'agent gonflant à une température d'au moins 120 °C,
c. évacuer par une plaque à buses comportant des alésages dont le diamètre à la sortie de buse est d'au plus 1,5 mm et
d. granuler la masse fondue contenant l'agent gonflant directement derrière la plaque à buses sous l'eau à une pression dans la plage allant de 1 à 20 bar.

12. Procédé de fabrication de matières de moulage selon l'une des revendications 4 à 11, comprenant les étapes consistant à :
a. polymériser,
b. ajouter un agent gonflant organique avant, pendant et/ou après la polymérisation et
c. séparer par tamisage les copolymères expansibles contenant l'agent gonflant.

13. Utilisation de copolymères ou de matières de moulage ignifuges selon l'une des revendications 1 à 12 comme partie individuelle ou co-partie de matériaux d'isolation ou de calfeutrage pour des bâtiments ou comme élément et composant dans les domaines électrique et électronique.

14. Utilisation de copolymères ou de matières de moulage ignifuges selon l'une des revendications 1 à 12, dans laquelle les copolymères ou les matières de moulage sont exempts d'halogène.
